# EUROPEAN PATENT APPLICATION

(11) **EP 4 557 117 A1**
(43) Date of publication of application: **21.05.2025**
(21) Application number: 24213631.5
(22) Date of filing: 18.11.2024
(51) Int. Cl.: G06F 16/22, G06F 16/25, G06F 16/28, G06F 40/177, G06F 40/18, G06F 16/242

(54) **CREATING A TABLE COLUMN USING APPLICATION PROGRAM INTERFACES**

(30) Priority: 17.11.2023 US 202363600519 P; 31.01.2024 US 202463627271 P
(71) Applicant: Sigma Computing, Inc., San Francisco, CA 94105 (US)
(72) Inventor: WOOLLEN, ROBERT C., San Francisco, 94105 (US); OWEN, GREGORY G., San Francisco, 94105 (US); JOSIPOVIC, STIPO, San Francisco, 94105 (US); FAN, SIYUAN, San Francisco, 94105 (US); HARRIS III, RAYMOND GORDON, Oakland, 94619 (US); BIBA, ALEXANDER, San Francisco, 94105 (US); KURUVILLA, ROHAN, San Francisco, 94114 (US); FRANTZ, JASON D., San Francisco, 94105 (US); GAGNERON, RODOLPHE, San Francisco, 94105 (US); RAMANATHAIAH, GURUDUTTA, San Francisco, 94105 (US)
(74) Representative: FRKelly

(57) **Abstract**

Creating a table column using application program interfaces including: presenting, on a client computing system by a workbook manager, a table; receiving, by the workbook manager, a request to create a new column for the table populated by application program interface (API) values from a API provider and based on one or more basis columns of the table; receiving, by the workbook manager, the API values from the API provider; and updating, by the workbook manager, the table to include the new column and the API values.

## Description

### BACKGROUND

### Field of the Invention

The field of the invention is data processing, or, more specifically, methods, apparatus, and products for creating a table column using application program interfaces.

### Description Of Related Art

Modern businesses may store large amounts of data in remote databases within cloud-based data warehouses. This data may be accessed using database statement languages, such as structured query language (SQL). Manipulating the data stored in the database may require constructing complex queries beyond the abilities of most users. Further, composing and issuing database queries efficiently may also be beyond the abilities of most users.

### SUMMARY

Methods, systems, and apparatus for creating a table column using application program interfaces including presenting, on a client computing system by a workbook manager, a table; receiving, by the workbook manager, a request to create a new column for the table populated by application program interface (API) values from a API provider and based on one or more basis columns of the table; receiving, by the workbook manager, the API values from the API provider; and updating, by the workbook manager, the table to include the new column and the API values.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF THE DRAWINGS

Figure 1 sets forth a block diagram of an example system configured for creating a table column using application program interfaces according to embodiments of the present invention.
Figure 2 sets forth a block diagram of an example system configured for creating a table column using application program interfaces according to embodiments of the present invention.
Figure 3 sets forth a block diagram of an example system configured for creating a table column using application program interfaces according to embodiments of the present invention.
Figure 4 sets forth a flow chart illustrating an exemplary method for creating a table column using application program interfaces according to embodiments of the present invention.
Figure 5 sets forth a flow chart illustrating an exemplary method for creating a table column using application program interfaces according to embodiments of the present invention.
Figure 6 sets forth a flow chart illustrating an exemplary method for creating a table column using application program interfaces according to embodiments of the present invention.
Figure 7 sets forth a flow chart illustrating an exemplary method for creating a table column using application program interfaces according to embodiments of the present invention.
Figure 8 sets forth a flow chart illustrating an exemplary method for creating a table column using application program interfaces according to embodiments of the present invention.

### DETAILED DESCRIPTION

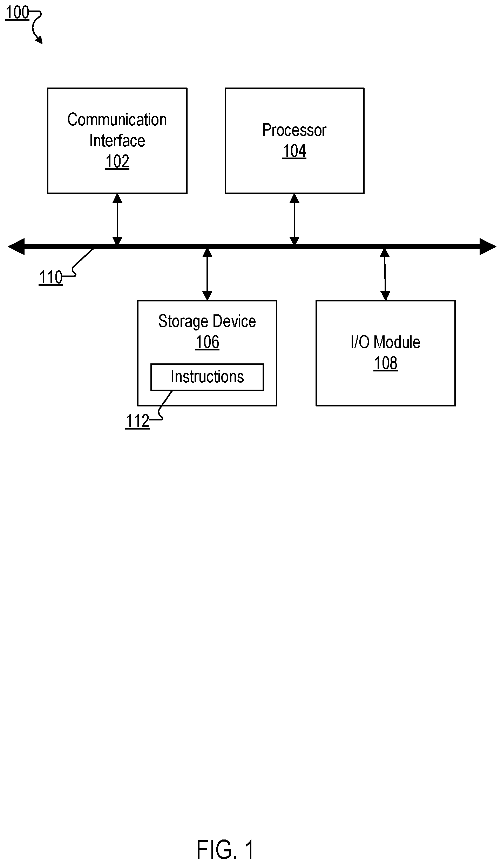

Example methods, apparatus, and products for creating a table column using application program interfaces in accordance with embodiments of the present disclosure are described with reference to the accompanying drawings, beginning with Figure 1. Figure 1 illustrates an exemplary computing device 100 that may be specifically configured to perform one or more of the processes described herein. As shown in Figure 1, computing device 100 may include a communication interface 102, a processor 104, a storage device 106, and an input/output ("I/O") module 108 communicatively connected one to another via a communication infrastructure 110. While an exemplary computing device 100 is shown in Figure 1, the components illustrated in Figure 1 are not intended to be limiting. Additional or alternative components may be used in other embodiments. Components of computing device 100 shown in Figure 1 will now be described in additional detail.

Communication interface 102 may be configured to communicate with one or more computing devices. Examples of communication interface 102 include, without limitation, a wired network interface (such as a network interface card), a wireless network interface (such as a wireless network interface card), a modem, an audio/video connection, and any other suitable interface.

Processor 104 generally represents any type or form of processing unit capable of processing data and/or interpreting, executing, and/or directing execution of one or more of the instructions, processes, and/or operations described herein. Processor 104 may perform operations by executing computer-executable instructions 112 (e.g., an application, software, code, and/or other executable data instance) stored in storage device 106.

Storage device 106 may include one or more data storage media, devices, or configurations and may employ any type, form, and combination of data storage media and/or device. For example, storage device 106 may include, but is not limited to, any combination of non-volatile media and/or volatile media. Electronic data, including data described herein, may be temporarily and/or permanently stored in storage device 106. For example, data representative of computer-executable instructions 112 configured to direct processor 104 to perform any of the operations described herein may be stored within storage device 106. In some examples, data may be arranged in one or more databases residing within storage device 106.

I/O module 108 may include one or more I/O modules configured to receive user input and provide user output. I/O module 108 may include any hardware, firmware, software, or combination thereof supportive of input and output capabilities. For example, I/O module 108 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 108 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 108 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 100.

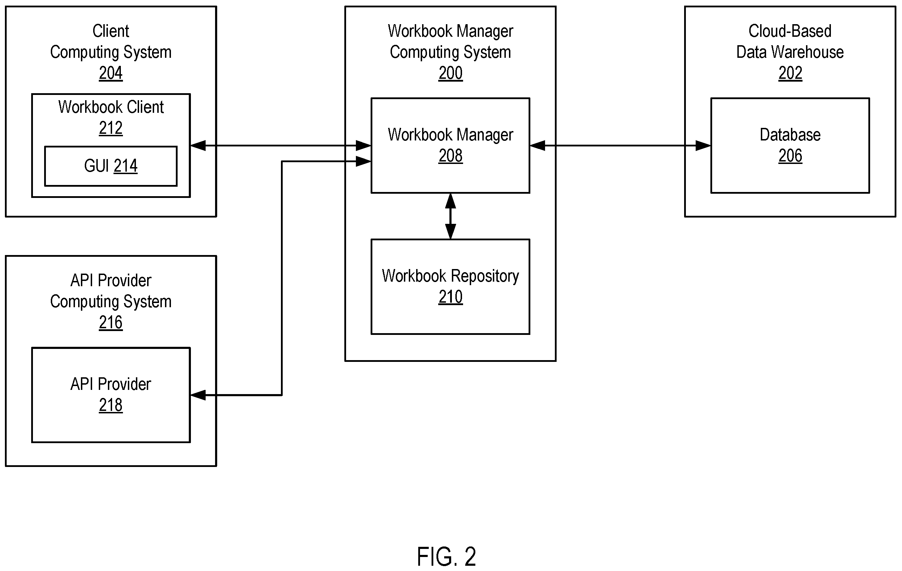

For further explanation, Figure 2 illustrates a block diagram depicting an exemplary system for creating a table column using application program interfaces according to embodiments of the present invention. As shown in Figure 2, the system includes a workbook manager computing system 200, a cloud-based data warehouse 202, a client computing system 204, and an API provider computing system 216. The workbook manager computing system 200 includes a workbook manager 208 and a workbook repository 210. The client computing system 204 includes a workbook client 212 with a graphical user interface (GLTI) 214. The cloud-based data warehouse 202 includes a database 206. The API provider computing system 216 includes an API provider 218.

The workbook manager 208 is hardware, software, or an aggregation of hardware and software configured to present a dataset within a workbook on a client computing system 204 via the workbook client 212. The workbook manager 208 uses the dataset to retrieve data from the database 206 by issuing a database statement to the cloud-based data warehouse 202 requesting the data. In response, the cloud-based data warehouse 202 sends query results including the data to the workbook manager 208. Once the query results are received, the data is then organized according to the dataset and workbook metadata to generate the workbook. The workbook is then sent to a workbook client 212 on the client computing system 204 for presentation to a client. The workbook manager 208 may reside on the workbook manager computing system 200, which is an intermediary computing system between each client computing system and the cloud-based data warehouse 202.

The cloud-based data warehouse 202 stores and manages client data on behalf of the client. The client *(e.g.,* via the client computing system 204) accesses the data via the workbook manager 208, which organizes and analyzes the data as datasets within a workbook. The workbook manager 208 may access the client data from the cloud-based data warehouse 202 using credentials supplied by the client.

A workbook is a presentation of data from a cloud-based data warehouse 202 *(e.g.,* using one or workbook elements). To present data from the cloud-based data warehouse 202, the data is retrieved from the database 206 *(e.g.,* using a database statement) and organized using a dataset. A dataset is a collection of information that resides on the workbook manager computing system 200 that includes instructions for the retrieval and organization of data from the cloud-based data warehouse 202. The dataset may include, for example, a network location of the cloud-based data warehouse 202, a structure in which to organize the data, and formulas or other data points to be included with the data. When the workbook is being presented, the dataset also includes the data retrieved from the cloud-based data warehouse. A workbook may include one or more workbook elements. Each workbook element includes a collection of graphical elements and organizing mechanism for a dataset or portion of a dataset. Workbooks may be stored in the workbook repository 210. Workbooks are described in further detail below.

The workbook client 212 is a part of the workbook manager 208 and works in concert with the workbook manager 208 to present a workbook on a client computing system 204. The workbook client 212 may perform local processing of changes made to the workbook and/or the dataset. The workbook client 212 may be an application executing within a web browser. The workbook client 212 may be part of an Internet application that includes the workbook manager 208 and is hosted on the workbook manager computing system 200.

The GUI 214 is a visual presentation configured to present workbooks to a client. The GUI 214 may present a mechanism by which a user can manipulate and effect change to the workbook in the form of a workbook edit. The GUI 214 may be displayed on client computing system 204 *(e.g.,* on a system display or mobile touchscreen).

The database 206 is a collection of data and a management system for the data. Data may be organized into columns and rows (also referred to as records). The particular columns, rows, and organization of the columns and rows that make up data may be specified in the database statement requesting the data. Data may be sent from the cloud-based data warehouse 202 in response to a database statement (also referred to as a query). Accordingly, data retrieved in response to a database statement may be referred to as query results. The database statement may be a structured query language statement.

The workbook manager 208 and workbook clients 212a, 212b may exchange information using state specifications. A state specification is a collection of data describing inputs into the GUI 214. The state specification may include manipulations of GUI elements within the GUI 214 along with data entered into the GUI 214 by a user of the client computing system 204. Such manipulations and data may indicate requests for and manipulations of data and or workbooks. Such manipulations and data may also indicate requests to edit an existing row or create a new row and values for that row. The state specification may be a standard file format used to exchange data in asynchronous browser-server communication. For example, the state specification may be a JavaScript Object Notation specification. The state specification may also include descriptions of elements that are used to apply changes to the data and/or workbooks. Such elements may include filters applied to an element of the workbook, the hierarchical level of an element of the workbook, joins performed within an element of the workbook, exposable parameters in an element of the workbook, and security for the workbook.

The workbook manager 208 may use the state specification as input to compile a database statement. This database statement generation process may include a number of intermediate forms. For example, the database statement generation process may begin with state specification being converted into an abstract syntax tree. The abstract syntax tree may then be canonicalized into a canonicalized hierarchy. The canonicalized hierarchy may then be linearized into the workbook algebra. The workbook algebra may then be lowered into a relational algebra, which may then be lowered into the database statement.

The API (application programming interface) provider computing system 216 is a computing system or group of computing systems hosting the API provider 218. The API provider 218 is an aggregation of hardware and software that provides API values in response to an API call (*i.e.,* and instruction request) from another system *(e.g.,* the workbook manager 208). The API provider 218 may be a large language model (LLM) that receives prompts as API instructions.

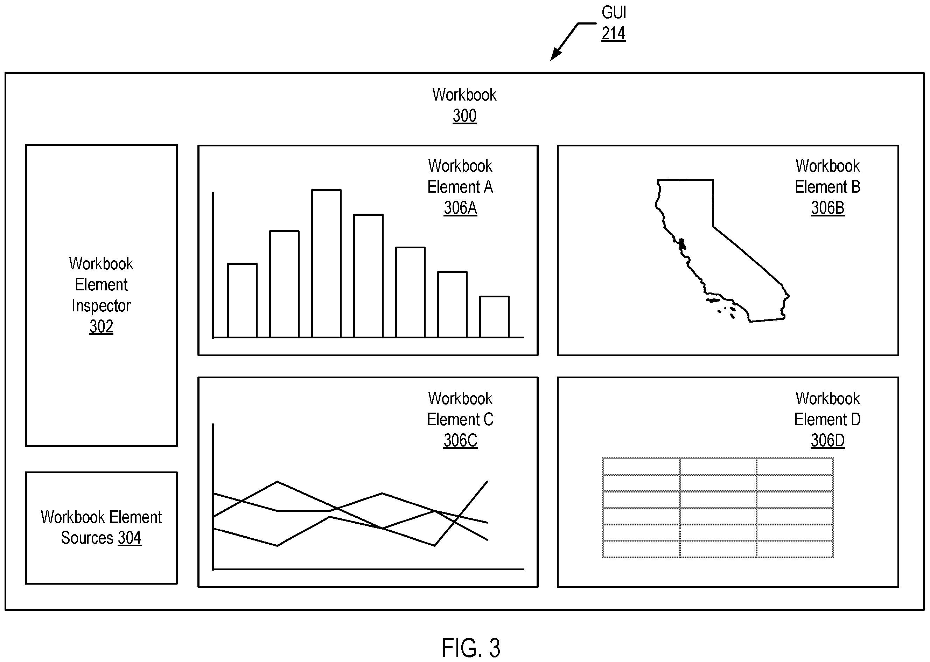

Figure 3 shows an exemplary GUI for creating a table column using application program interfaces according to embodiments of the present invention. As shown in Figure 3, the exemplary GUI 214 includes a workbook 300. The workbook 302 includes a workbook element inspector 302, workbook element sources 304, and four workbook elements (workbook element A 306A, workbook element B 306B, workbook element C 306C, workbook element D 306D).

The workbook 300 is a collection of graphical elements and organizing mechanism for a dataset. The workbook may present a dataset with data retrieved by the workbook manager from a cloud-based data warehouse. The dataset may then be organized based on the workbook metadata retrieved from the workbook repository. As shown in Figure 3, the workbook 300 includes four workbook elements. Workbook element A 306A presents a bar graph, workbook element B 306B presents a map, workbook element C 306C presents a line graph, and workbook element D 306D presents a spreadsheet structure. Other types of workbook elements exist beyond the examples shown in Figure 3. Some workbook elements (such as workbook element A 306A, workbook element B 306B, and workbook element C 306C) are visualizations. Visualizations are graphical element that convey relationships between data in the dataset. Visualizations may include, for example, graphs, charts, or maps. Spreadsheet structures are a presentation of a dataset (such as a table) from a database on a cloud-based data warehouse. The spreadsheet structure displays rows of data organized by columns. The columns delineate different categories of the data in each row. One or more columns may be calculation columns that include calculation results using other columns in the spreadsheet structure based on a formula received from the client. Both visualizations and the spreadsheet structures may include dynamic elements and be configured to interact with a client using the client computing system 204 via the GUI 214. Each workbook element (workbook element A 306A, workbook element B 306B, workbook element C 306C, workbook element D 306D) may use a dataset unique to that workbook element or use a dataset shared by at least one other workbook element.

The workbook element inspector 302 is a mechanism by which a user may configure each workbook element. Specifically, the workbook element inspector 302 allows a user to bind dimensions of the dataset to channels of the workbook element. A dimension of the dataset refers to a group of values, rows, or columns that share a characteristic. For example, a dimension may be all values in the dataset from a particular column, all rows in the dataset that share a value for a particular column, all columns in the dataset that share a value for a particular row, etc. A channel of the workbook element 304, 306 refers to aspect of the workbook element that is assignable to a dimension. Channels of a spreadsheet structure may include columns or rows *(e.g.,* a column of the dataset may be bound to a particular column location within the visual presentation of the spreadsheet structure). Channels of visualizations may include, for example, x-axis, y-axis, or color. For example, a column of a dataset may be bound to the x-axis of a bar chart.

The workbook element inspector 302 may include a mechanism to define and organize hierarchical relationships between the columns of the of a spreadsheet structure. The term "hierarchical relationship" refers to subordinate and superior groupings of columns. For example, a database may include rows for an address book, and columns for state, county, city, and street. A dataset from the database may be grouped first by state, then by county, and then by city. Accordingly, the state column would be at the highest level in the hierarchical relationship, the county column would be in the second level in the hierarchical relationship, and the city column would be at the lowest level in the hierarchical relationship.

The workbook element sources 304 presents the user with the primary and any secondary sources (such as datasets) for the selected workbook element. The workbook element sources 304 may also include a mechanism for a user to request and configure a dataset from a database to be presented as a workbook element in a workbook 300. Such a mechanism may be part of the interactivity of the workbook 300. Specifically, a user may manipulate a workbook (*e.g.,* by dragging and dropping columns or rows, resorting columns or rows, manipulating a graph etc.) and, in response, the GUI 214 may generate a request (*e.g.,* in the form of a state specification) for a dataset and send the request to the workbook manager. Such a mechanism may also include a direct identification of the rows and columns of a database table that a user would like to access (*e.g.,* via a selection of the rows and columns in a dialog box). The GUI 214 may also include a mechanism for a user to create a new table on the database, add rows to a table, and move rows within the table.

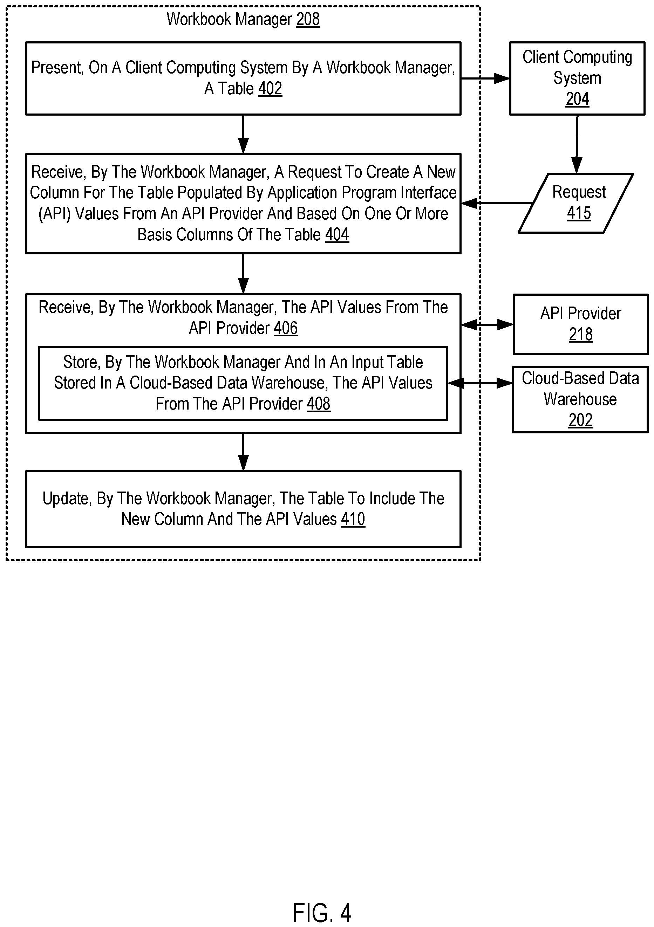

For further explanation, Figure 4 sets forth a flow chart illustrating an exemplary method for creating a table column using application program interfaces according to embodiments of the present invention. The method of Figure 4 includes presenting 402, on a client computing system 204 by a workbook manager 208, a table. In some embodiments, the table may include a table stored in a cloud-based data warehouse 202, such as an input table. Accordingly, in some embodiments, presenting 402 the table may include loading the table from the cloud-based data warehouse and displaying at least a portion of the table via a GUI on the client computing system 204. In some embodiments, the table may include a table created or generated on the workbook manager 208. For example, the table may include data input into a workbook element or other GLTI element from the client computing system 204 or another client computing system 204, data aggregated from potentially multiple tables in the cloud-based data warehouse 202, or combinations thereof.

The method of Figure 4 also includes receiving 404, by the workbook manager 208, a request 415 to create a new column for the table populated by application program interface (API) values from an API provider 218 and based on one or more basis columns of the table. In some embodiments, receiving 404 the request 415 to create the new column may be carried out by detecting that the user has manipulated elements of the GUI and/or submitted data using the GUI such that the generation of the request 415 is triggered and the request 415 is sent to the workbook manager 208. Although the approaches set forth herein are presented in the context or receiving 404 a request 415 to add a new column to the table, the approaches set forth herein may also be applied to a request to populate an existing and/or empty column with API values from the API provider.

A basis column is a column within the table that includes basis values upon which the API values returned from the API provider are based. The API values are based on one or more basis columns of the table in that the API values returned from the API provider for a given row of the table will be generated based on some other value or values in that given row (or another row) as stored in the one or more basis columns. Accordingly, in some embodiments, the request 415 may include an identifier of the one or more basis columns. Accordingly, the basis values in the one or more basis columns may be included into an API call to the API provider for the API values. In some embodiments, the request 415 may include an identifier or indication of a particular API provider 218 from which the API values will be requested. In some embodiments, the request 415 may also include authentication credentials for the API provider 218. In some embodiments, the request 415 may include identifiers of particular types of API values to be requested from the API provider 218. The request 415 may also include other information that may facilitate generating API calls to the API provider 218 for the API values.

The request 415 may include a description of an API call to the API provider that uses the basis value as input. Alternatively, the request 415 may include a natural language instruction to use the basis value as input to generate the API values. A natural language instruction is an instruction constructed using human written communications patterns and disregarding any computer-based syntax. The natural language instruction may describe the desired API values for a given basis value from the table. As an example, assume that the table includes a basis column for internet protocol (IP) addresses. A new column may be created that uses these IP addresses to query an API provider 218 that provides geographic locations corresponding IP addresses. As another example, assume that the table includes basis columns for names, email addresses, and job titles for individuals. A new table may be created that queries a large language model (LLM) with an exposed API to generate email messages or templates for each individual in the table.

Once the request 415 is received, the workbook manager may then generate, using the request 415, an API call to the API provider. Generating, using the request 415, the API call to the API provider may include converting the request 415 into proper syntax for the API call to the API provider. For example, the API call may include the natural language instruction as received in the request as well as values from the basis column or columns. The API call may include all values from the basis column or columns or a subset of the basis column values (such as the basis column values visible in the current presentation of the table).

The request 415 or the API call may include a plurality of categories in which to organize the values of the basis column. Specifically, the plurality of categories may be used to limit the API values to specified categories. For example, the basis column may include reviews of a restaurant, the natural-language description of the AI values may be "categorize the reviews", and the plurality of categories may be "positive", "negative", and "neutral". The request 415 or API call may also include additional configuration options, such as a minimum or maximum number of words or numbers for each API value, a tone of speech to be used for each API value, a language to be used for each API value, etc.

The method of Figure 4 also includes receiving 406, by the workbook manager 208, the API values from the API provider 218. In some embodiments, receiving 406 the API values from the API provider 218 may include generating one or more API calls and issuing those API calls to the API provider 218. For example, the one or more API calls may include various values included in or identified by the request, such as values in identified basis columns. In some embodiments, each API call may correspond to a particular row of the table such that, for each row of the table, a corresponding API call is generated that requests an API value for that row in the new column. In some embodiments, each API call may include data for multiple rows of the table, thereby requesting multiple API values in a single response. After generating these one or more API calls, the one or more API calls may be issued by the workbook manager 208 to the API provider 218 and the API values received in response.

In some embodiments, the received API values may be stored in an input table in the cloud-based data warehouse 202 for later retrieval or use. Accordingly, in some embodiments, receiving 406, by the workbook manager 208, the API values from the API provider 218 may include storing 408, by the workbook manager 208 and in an input table stored in the cloud-based data warehouse 202, the API values from the API provider. Each API value may be placed in a separate row of the new column corresponding to the basis column value associated with that API value. Columns whose values are defined or calculated based on the values of other columns, such as columns defined using a formula, generally do not store the values for that column in a table. Rather, each time the table is rendered or presented, the formulas are reexecuted and the recalculated values are presented in the table. This approach may introduce significant costs or resource usage as it would necessitate that the API provider be called each time the table is presented or rendered.

Instead, the API values are stored in an input table in the cloud-based data warehouse 202. Accordingly, in response to a request to render or present the table, the API values may be reloaded from this input table for inclusion in the table. In embodiments where the presented 402 table is a table in the cloud-based data warehouse 202, the API values may be stored in that table. For example, the workbook manager 208 may issue a database statement or query that causes the column to be added to the table in the cloud-based data warehouse 202 and the API values stored therein. In some embodiments, the API values may be stored in a separate table in the cloud-based data warehouse 202. In embodiments where the presented 402 table is created or generated in the workbook manager 208, the API values may be stored in an input table of the cloud-based data warehouse 202 that is accessed when the table is presented or rendered.

The method of Figure 4 also includes updating 410, by the workbook manager 208, the table to include the new column and the API values. For example, this may include sending, by the workbook manager 208, the API values to the client computing system 204 for presentation in the table. As another example, this may also include updating a table definition or specification for the table to include the new column. In some embodiments, this may include indicating the table in the cloud-based data warehouse 202 storing the API values such that subsequent presentations of the table may access the API values from the cloud-based data warehouse 202 instead of issuing additional API calls to the API provider 218.

Updating 410 the table to include the new column and the API values may include augmenting values that exist in the new column. For example, the new column may be created and populated with initial values. The API values received from the API Provider 218 may be used as input with the initial values to produce an output that is used to overwrite each row of the new column. Updating 410 the table to include the new column and the API values may also include indicating, on the cloud-based data warehouse 202, that the new column includes AI-generated content. Indicating, on the cloud-based data warehouse, that the new column includes AI-generated content may be carried out by storing, on the cloud-based data warehouse, an indication that the input table and/or the particular new column includes AI-generated content. The indication may be stored in metadata for the input table or in a row of the new column hidden from normal view on the client computing system. Alternatively, the indication may be stored in a separate table on the cloud-based data warehouse 202, or within an audit table on a separate cloud-based data warehouse.

The above steps improve the operation of the computer system by using APIs to populate a column of a table. This is accomplished by receiving a request to create a new column for the table populated by application program interface values from an API provider and based on one or more basis columns of the table, receiving the API values from the API provider, updating, by the workbook manager, the table to include the new column and the API values.

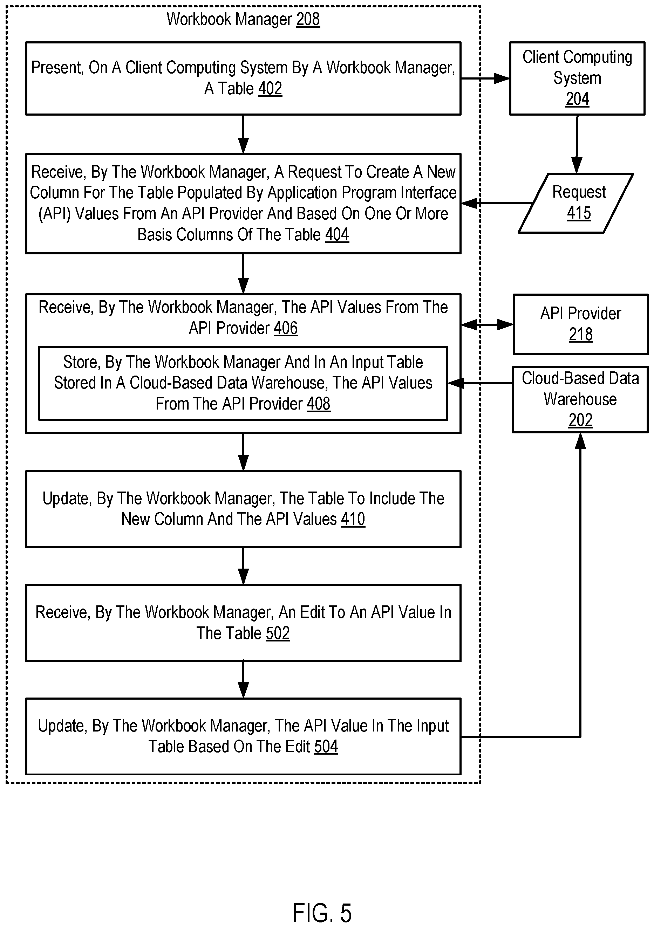

For further explanation, Figure 5 sets forth a flow chart illustrating a further exemplary method for creating a table column using application program interfaces according to embodiments of the present invention that includes presenting 402, on a client computing system 204 by a workbook manager 208, a table; receiving 404, by the workbook manager 208, a request 415 to create a new column for the table populated by application program interface (API) values from an API provider 218 and based on one or more basis columns of the table; receiving 406, by the workbook manager 208, the API values from the API provider 218, including: storing 408, by the workbook manager 208 and in an input table stored in the cloud-based data warehouse 202, the API values from the API provider; and updating 410, by the workbook manager 208, the table to include the new column and the API values.

The method of Figure 5 differs from the method of Figure 4, however, in that the method of Figure 5 further includes receiving 502, by the workbook manager, an edit to an API value in the table. This may be carried out by detecting that a user (e.g., of a client computing system 204) has edited a presented API value in the table. For example, a user may interact with a cell of a spreadsheet element or other workbook element presenting the table to edit the API value presented via that cell.

The method of Figure 5 also includes updating 504, by the workbook manager 208, the API value in the input table based on the edit. For example, the workbook manager 208 may issue a database statement or query to the cloud-based data warehouse 202 that causes the edited API value as stored in the input table to be updated to reflect the received edit. Thus, when the API values are loaded from the input table (e.g., when the table is presented or rendered), the loaded API value will reflect the received edit.

The approaches set forth above allow for API values to be edited after receipt without the need to issue additional API calls to the API provider 218, which may be useful in correcting errors or otherwise modifying received API values. Continuing with the example above where the new column may include email messages generated by an LLM with an exposed API, assume that one of the received responses included a typo or is grammatically incorrect. A user may edit this email message via the table to correct the error rather than request a new email message from the LLM that doesn't include the error.

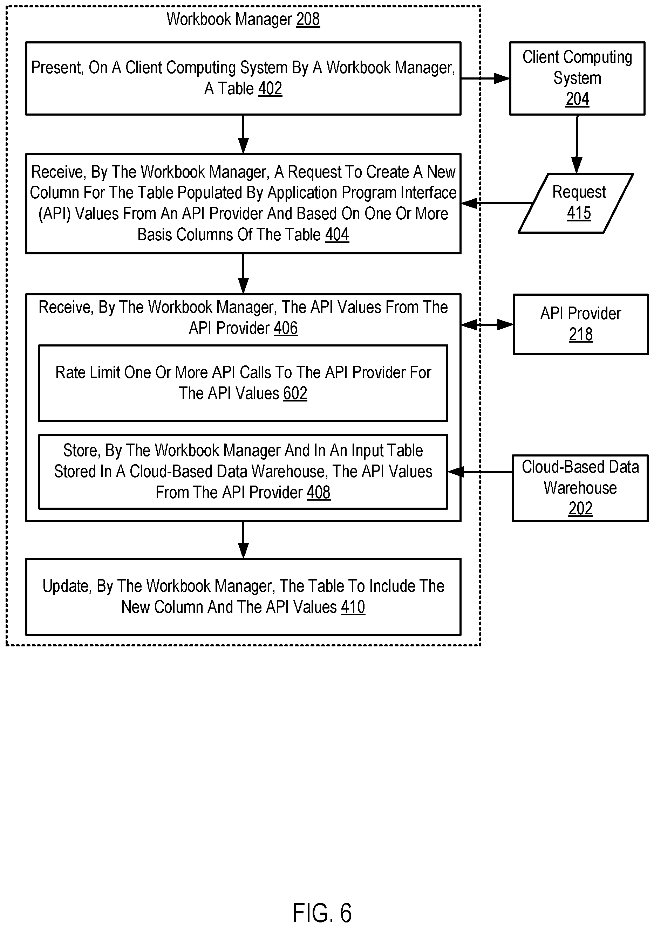

For further explanation, Figure 6 sets forth a flow chart illustrating a further exemplary method for creating a table column using application program interfaces according to embodiments of the present invention that includes presenting 402, on a client computing system 204 by a workbook manager 208, a table; receiving 404, by the workbook manager 208, a request 415 to create a new column for the table populated by application program interface (API) values from an API provider 218 and based on one or more basis columns of the table; receiving 406, by the workbook manager 208, the API values from the API provider 218, including: storing 408, by the workbook manager 208 and in an input table stored in the cloud-based data warehouse 202, the API values from the API provider; and updating 410, by the workbook manager 208, the table to include the new column and the API values.

The method of Figure 6 differs from the method of Figure 4, however, in that receiving 406, by the workbook manager 208, the API values from the API provider 218 also includes rate limiting 602 one or more API calls to the API provider 218 for the API values. As is set forth above, receiving 406 the API values may include issuing one or more API calls to the API provider. Where the table includes a large number of rows, this may result in a large number of API calls and/or API calls that each request a large number of API values. Moreover, some third-party API providers may have limitations on the size of API calls that may be processed, the frequency at which API calls may be issued, rates for data ingress or egress, and the like. Such limitations may be defined, for example, by a service-level agreement (SLA) or otherwise defined.

Accordingly, in some embodiments, the issued API calls may be rate limited so as to not overburden the API provider 218 and/or so as to not violate a SLA. For example, in some embodiments, rate limiting 602 the one or more API calls may include restricting a frequency at which the API calls are issued. As another example, in some embodiments, rate limiting 602 the one or more API calls may include batching or otherwise grouping API calls such that API calls are issued in batches. In some embodiments, after receiving the API values for a given batch, a next batch of API calls may be issued. As another example, in some embodiments, rate limiting 602 the one or more API calls may include constructing the API calls to request a limited number of API values per call, thereby restricting the size of the API calls and the size of the responses to the API calls. Rate limiting 602 the one or more API calls may also be performed using other approaches as can be appreciated.

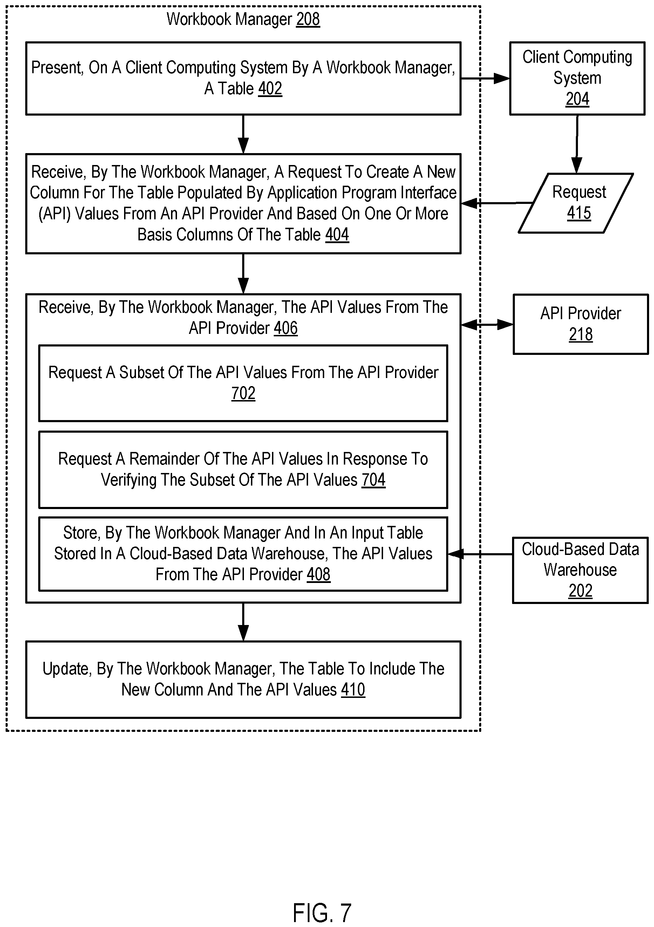

For further explanation, Figure 7 sets forth a flow chart illustrating a further exemplary method for creating a table column using application program interfaces according to embodiments of the present invention that includes presenting 402, on a client computing system 204 by a workbook manager 208, a table; receiving 404, by the workbook manager 208, a request 415 to create a new column for the table populated by application program interface (API) values from an API provider 218 and based on one or more basis columns of the table; receiving 406, by the workbook manager 208, the API values from the API provider 218, including: storing 408, by the workbook manager 208 and in an input table stored in the cloud-based data warehouse 202, the API values from the API provider; and updating 410, by the workbook manager 208, the table to include the new column and the API values.

The method of Figure 7 differs from the method of Figure 4, however, in that receiving 406, by the workbook manager 208, the API values from the API provider 218 also includes requesting 702 a subset of the API values from the API provider. For example, rather than issue API calls for API values for each column of the table, API calls may be issued for API values for a subset of the rows of the table. Such a subset may include a single row, a predefined number of rows, a defined percentage or fraction of the rows, and the like. After requesting 702 this subset of the API values, the subset of API values may be received from the API provider 218.

Requesting 702 a subset of the API values from the API provider may include determining the visible portion of the input table being presented within the workbook on the client computing system and obtaining the visible basis column row identifiers corresponding to the API values to be added. Retrieving the subset of API values before retrieving API values outside the subset of API values may be carried out by generating a call to the API provider for the subset of API values that will be visible on the client computing system. The call may further retrieve a specified number of rows above and/or below the visible rows to anticipate a user scrolling up or down before the next batch of AI values can be retrieved. Once the subset of AI values is retrieved, AI values outside the subset may be retrieved in a manner that anticipates the AI values that may be viewed next (*e.g.,* based on the direction that a user has recently scrolled).

The method of Figure 7 further differs from Figure 4 in that receiving 406, by the workbook manager 208, the API values from the API provider 218 also includes requesting 704 a remainder of the API values in response to verifying the subset of the API values. The remainder of the API values include those API values not included in the previously requested 702 subset of API values. Verifying the subset of the API values may be performed using various approaches. For example, in some embodiments, a given API value may be verified where the API value includes some received value as opposed to an error code, a null value, and the like. As another example, a given API value may have its contents automatically verified using various rules or other approaches.

In some embodiments, the subset of the API values may be verified using manual or user-provided verification. For example, a presentation of the table may be updated to include the received subset of API values. The workbook manager 208 may then solicit (e.g., via a notification or other message) that the user verify the subset of the API values. In this example, a user may provide, via a GUI, an indication that the API values are verified or not verified. In response to a successful verification of the subset of the API values, the remaining API values may be requested and the table updated accordingly.

The approaches set forth above reduce computational resources and overhead that may be used when requesting a large set of API values from an API provider 218 should the API provider fail to provide the desired or correct results. Instead, a smaller number of API values are requested. If verified, the remaining values may be requested. If verification fails, the computational resources and overhead that would otherwise be used in requesting the remaining values is saved.

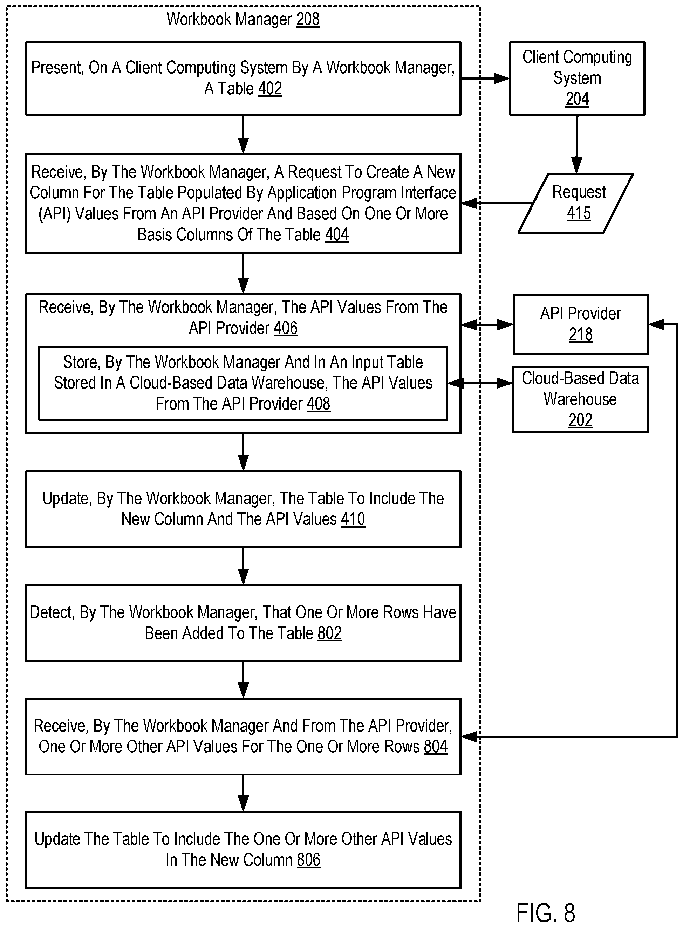

For further explanation, Figure 8 sets forth a flow chart illustrating a further exemplary method for creating a table column using application program interfaces according to embodiments of the present invention that includes presenting 402, on a client computing system 204 by a workbook manager 208, a table; receiving 404, by the workbook manager 208, a request 415 to create a new column for the table populated by application program interface (API) values from an API provider 218 and based on one or more basis columns of the table; receiving 406, by the workbook manager 208, the API values from the API provider 218, including: storing 408, by the workbook manager 208 and in an input table stored in the cloud-based data warehouse 202, the API values from the API provider; and updating 410, by the workbook manager 208, the table to include the new column and the API values.

The method of Figure 8 differs from the method of Figure 4, however, in that the method of Figure 8 also includes detecting 802, by the workbook manager, that one or more rows have been added to the table. In some embodiments, this may include detecting or receiving a command to add one or more rows to the table from a client computing system 204. For example, a user may manipulate a GUI element or otherwise provide a command that causes one or more rows to be added to the table.

In some embodiments, detecting 802 that one or more rows have been added to the table may include periodically polling or checking the table to determine if any rows have been added. This may include, for example, requesting or otherwise checking a number of rows in the table and comparing that number to some previously determined number of rows. In some embodiments, this may include comparing a listing or enumeration of row identifiers to a previously determined listing or enumeration of row identifiers. In some embodiments, this may also include detecting 802 that the newly added rows have populated values in the basis columns used for generating the API values.

The method of Figure 8 also includes receiving 804, by the workbook manager 208 and from the API provider 218, one or more other API values for the one or more rows (e.g., the newly added rows). For example, one or more API calls may be issued to the API provider 218 for API values to populate the new column in those newly added rows. This may include accessing values in the basis columns of the newly added rows to generate the API calls for the respective API values. The method of Figure 8 also includes updating 806 the table to include the one or more other API values. For example, this may include updating a presentation of the table to include the one or more API values. This may also include storing the one or more API values in the input table of the cloud-based data warehouse 202 used to store received API values.

In view of the explanations set forth above, readers will recognize that the benefits of creating a table column using application program interfaces according to embodiments of the present invention include:
- Improving the operation of the computer system by reducing user effort to populate a table, increasing system utility.
- Improving the operation of the computer system by using APIs to populate a column of an input table, increasing system utility.
- Addressing problems caused by inserting API values into a table on a cloud-based data warehouse by:
   ∘ Placing the received API values in a separate (input) table on the cloud-based data warehouse, allowing the API values to be managed separately from the other columns in the table.
   ∘ Refreshing the received API values on a different schedule (or not at all) compared with other columns in the table to avoid delays in receiving API values from the API provider.
   ∘ Allowing the API values to be edited without rerunning the API calls.
   ∘ Performing the API calls for a limited number of API values that are validated prior to performing the full set of API calls to avoid receiving a large number of invalid responses as API values.
   ∘ Batching a rate-limiting API calls to avoid violating service-level agreements.
   ∘ Periodically polling the table to detect newly added rows that require API calls to populate the API value column.

Exemplary embodiments of the present invention are described largely in the context of a fully functional computer system for creating a table column using application program interfaces. Readers of skill in the art will recognize, however, that the present invention also may be embodied in a computer program product disposed upon computer readable storage media for use with any suitable data processing system. Such computer readable storage media may be any storage medium for machine-readable information, including magnetic media, optical media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps of the method of the invention as embodied in a computer program product. Persons skilled in the art will recognize also that, although some of the exemplary embodiments described in this specification are oriented to software installed and executing on computer hardware, nevertheless, alternative embodiments implemented as firmware or as hardware are well within the scope of the present invention.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions

It will be understood from the foregoing description that modifications and changes may be made in various embodiments of the present invention without departing from its true spirit. The descriptions in this specification are for purposes of illustration only and are not to be construed in a limiting sense. The scope of the present invention is limited only by the language of the following claims.

Further aspects and advantages of the disclosure may be appreciated from the following statements.

Statements:
1. A method for creating a table column using application program interfaces, the method comprising:
   presenting, on a client computing system by a workbook manager, a table;
   receiving, by the workbook manager, a request to create a new column for the table populated by application program interface (API) values from an API provider and based on one or more basis columns of the table;
   receiving, by the workbook manager, the API values from the API provider; and
   updating, by the workbook manager, the table to include the new column and the API values.
2. The method of statement 1, further comprising storing, by the workbook manager and in an input table stored in a cloud-based data warehouse, the API values from the API provider.
3. The method of statement 2, further comprising loading, by the workbook manager, the API values from the input table in response to a request to present the table.
4. The method of statement 2, wherein the table and the input table are different tables in the cloud-based data warehouse.
5. The method of statement 2, wherein the table is generated on the workbook manager.
6. The method of statement 2, further comprising:
   receiving, by the workbook manager, an edit to an API value of the API values in the table; and
   updating, by the workbook manager, the API value in the input table based on the edit.
7. The method of statement 1, wherein receiving the API values from the API provider comprises rate limiting one or more API calls to the API provider for the API values.
8. The method of statement 7, wherein rate limiting the one or more API calls is based on a service-level agreement (SLA) with the API provider.
9. The method of statement 1, wherein receiving the API values from the API provider comprises:
   requesting a subset of the API values from the API provider; and
   requesting a remainder of the API values in response to verifying the subset of the API values.
10. The method of statement 1, further comprising:
   detecting, by the workbook manager, that one or more rows have been added to the table;
   receiving, by the workbook manager and from the API provider, one or more other API values for the one or more rows; and
   updating the table to include the one or more other API values in the new column.
11. An apparatus for creating a table column using application program interfaces, the apparatus comprising a computer processor, a computer memory operatively coupled to the computer processor, the computer memory having disposed within it computer program instructions that, when executed by the computer processor, cause the apparatus to carry out the steps of:
   presenting, on a client computing system by a workbook manager, a table;
   receiving, by the workbook manager, a request to create a new column for the table populated by application program interface (API) values from a API provider and based on one or more basis columns of the table;
   receiving, by the workbook manager, the API values from the API provider; and
   updating, by the workbook manager, the table to include the new column and the API values.
12. The apparatus of statement 11, further comprising storing, by the workbook manager and in an input table stored in a cloud-based data warehouse, the API values from the API provider.
13. The apparatus of statement 12, wherein the computer program instructions further cause the apparatus to carry out the steps of loading, by the workbook manager, the API values from the input table in response to a request to present the worksheet.
14. The apparatus of statement 12, wherein the table and the input table are different tables in the cloud-based data warehouse.
15. The apparatus of statement 12, wherein the table is generated on the workbook manager.
16. The apparatus of statement 12, wherein the computer program instructions further cause the apparatus to carry out the steps of:
   receiving, by the workbook manager, an edit to an API value of the API values in the table; and
   updating, by the workbook manager, the API value in the input table based on the edit.
17. The apparatus of statement 11, wherein receiving the API values from the API provider comprises rate limiting one or more API calls to the API provider for the API values.
18. The apparatus of statement 17, wherein rate limiting the one or more API calls is based on a service-level agreement (SLA) with the API provider.
19. The apparatus of statement 11, wherein receiving the API values from the API provider comprises:
   requesting a subset of the API values from the API provider; and
   requesting a remainder of the API values in response to verifying the subset of the API values.
20. A computer program product for creating a table column using application program interfaces, the computer program product disposed upon a computer readable medium, the computer program product comprising computer program instructions that, when executed, cause a computer to carry out the steps of:
   presenting, on a client computing system by a workbook manager, a table;
   receiving, by the workbook manager, a request to create a new column for the table populated by application program interface (API) values from a API provider and based on one or more basis columns of the table;
   receiving, by the workbook manager, the API values from the API provider; and
   updating, by the workbook manager, the table to include the new column and the API values.

## Claims

1. A method for creating a table column using application program interfaces, the method comprising:
presenting, on a client computing system by a workbook manager, a table;
receiving, by the workbook manager, a request to create a new column for the table populated by application program interface (API) values from an API provider and based on one or more basis columns of the table;
receiving, by the workbook manager, the API values from the API provider; and
updating, by the workbook manager, the table to include the new column and the API values.

2. The method of claim 1, further comprising storing, by the workbook manager and in an input table stored in a cloud-based data warehouse, the API values from the API provider.

3. The method of claim 2, further comprising loading, by the workbook manager, the API values from the input table in response to a request to present the table.

4. The method of claim 2, wherein the table and the input table are different tables in the cloud-based data warehouse.

5. The method of claim 2, wherein the table is generated on the workbook manager.

6. The method of claim 2, further comprising:
receiving, by the workbook manager, an edit to an API value of the API values in the table; and
updating, by the workbook manager, the API value in the input table based on the edit.

7. The method of claim 1, wherein receiving the API values from the API provider comprises rate limiting one or more API calls to the API provider for the API values.

8. The method of claim 7, wherein rate limiting the one or more API calls is based on a service-level agreement (SLA) with the API provider.

9. The method of claim 1, wherein receiving the API values from the API provider comprises:
requesting a subset of the API values from the API provider; and
requesting a remainder of the API values in response to verifying the subset of the API values.

10. The method of claim 1, further comprising:
detecting, by the workbook manager, that one or more rows have been added to the table;
receiving, by the workbook manager and from the API provider, one or more other API values for the one or more rows; and
updating the table to include the one or more other API values in the new column.

11. An apparatus for creating a table column using application program interfaces, the apparatus comprising a computer processor, a computer memory operatively coupled to the computer processor, the computer memory having disposed within it computer program instructions that, when executed by the computer processor, cause the apparatus to carry out the steps of:
presenting, on a client computing system by a workbook manager, a table;
receiving, by the workbook manager, a request to create a new column for the table populated by application program interface (API) values from a API provider and based on one or more basis columns of the table;
receiving, by the workbook manager, the API values from the API provider; and
updating, by the workbook manager, the table to include the new column and the API values.

12. The apparatus of claim 11, further comprising storing, by the workbook manager and in an input table stored in a cloud-based data warehouse, the API values from the API provider.

13. The apparatus of claim 12, wherein the computer program instructions further cause the apparatus to carry out the steps of loading, by the workbook manager, the API values from the input table in response to a request to present the worksheet.

14. The apparatus of claim 12, wherein the table and the input table are different tables in the cloud-based data warehouse.

15. A computer program product for creating a table column using application program interfaces, the computer program product disposed upon a computer readable medium, the computer program product comprising computer program instructions that, when executed, cause a computer to carry out the steps of:
presenting, on a client computing system by a workbook manager, a table;
receiving, by the workbook manager, a request to create a new column for the table populated by application program interface (API) values from a API provider and based on one or more basis columns of the table;
receiving, by the workbook manager, the API values from the API provider; and
updating, by the workbook manager, the table to include the new column and the API values.
